# EUROPEAN PATENT APPLICATION

(11) **EP 1 739 866 A2**
(43) Date of publication of application: **03.01.2007**
(21) Application number: 06114895.3
(22) Date of filing: 02.06.2006
(51) Int. Cl.: H04B 10/24, H04J 14/02

(54) **Dynamic allocation of bandwidth in a bidirectional optical transmission system**

(30) Priority: 29.06.2005 US 170595
(71) Applicant: AT&T Corp., New York, NY 10013-2412 (US)
(72) Inventor: Feuer, Mark David, Colts Neck, New Jersey 07722 (US); Woodward, Sheryl Leigh, Holmdel, New Jersey 07733 (US)
(74) Representative: Harding, Richard Patrick

(57) **Abstract**

A bidirectional optical communications system that is operable to dynamically allocate wavelengths for transmission in either direction in an optical fiber. The dynamic allocation is controlled by programmable optical devices. The programmable optical devices may be well known programmable devices such as wavelength selective switches and wavelength blockers or any other programmable optical device capable of dynamically allocating wavelengths between the two directions in the optical fiber. In addition, the programmable optical devices may be any combination of such wavelength selective switches, wavelength blockers or other programmable optical devices with other optical devices such as optical circulators, gain blocks, add/drop multiplexers, or fixed optical filters. Such a bidirectional optical communications system enables the dynamic allocation of bandwidth in an optical fiber without the need to replace components, such as fixed optical filters, and without disturbing communications on all the wavelengths transmitted in the optical fiber.

## Description

### BACKGROUND OF THE INVENTION

The present invention is directed to an optical transmission system. More specifically, the present invention is directed to a bidirectional optical transmission system in which bandwidth can be dynamically allocated to transmit information in either direction in an optical fiber.

It is known how to provide bi-directional optical communications in a single optical fiber. Today, single-fiber bidirectional optical transmission systems generally offer information transfer capacity wherein the wavelengths used to carry information in a given direction through the fiber are fixed and symmetric. That is, half the wavelength channels are permanently assigned, or fixed, to carry information in one direction through the fiber, and half the wavelength channels are permanently assigned to carry information in the other direction through the fiber.

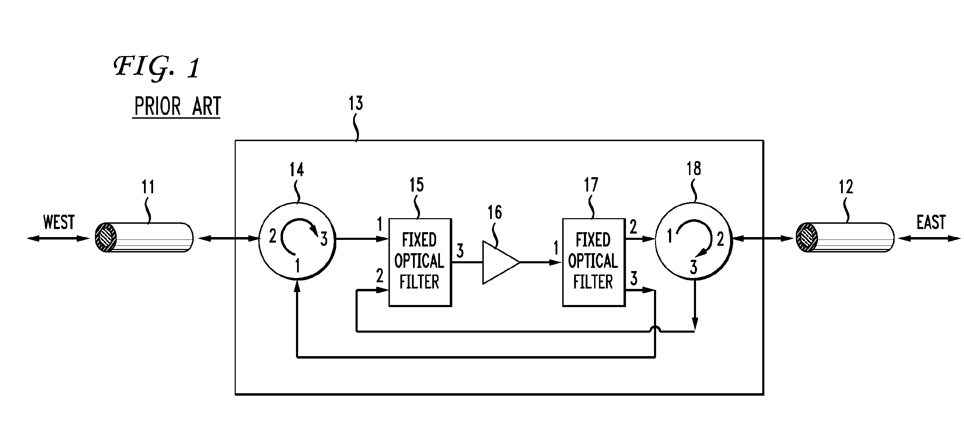

An example of one such known configuration is illustrated in FIG. 1. As shown, a bidirectional optical fiber 11 is coupled to a bidirectional optical fiber 12 through a bidirectional optical amplifier 13. Bidirectional optical fibers 11 and 12 have properties such that they can transmit, or carry, wavelengths λ_{1...n} in both the East and West directions. Bidirectional optical amplifier 13 contains optical circulators 14 and 18, a 2x1 fixed optical filter 15, a 1x2 fixed optical filter 17, and a gain block 16, all of which are well known in the art. Optical circulators 14 and 18 operate such that light input at port 1 is output at port 2, and light input at port 2 is output at port 3. 2x1 Fixed optical filter 15 has the property that only light at wavelengths λ_{1...n/2} input at port 1 will be output at port 3, and only light at wavelengths λ_{(n+1)/2 ...n} input at port 2 will be output at port 3. 1x2 Fixed optical filter 17 has the property that light at wavelengths λ_{1...n/2} input at port 1 will be output at port 2, and light at wavelengths λ_{(n+1)/2...n} input at port 1 will be out put at port 3. Through such a configuration of fixed optical filters 15 and 17, one-half of the wavelengths, λ_{1...n/2}, are fixed to transmit information in an East direction through bidirectional optical fibers 11 and 12, and the other half of the wavelengths, λ_{(n+1)/2 ...n}, are fixed to transmit information in a West direction through bidirectional optical fibers 11 and 12.

The bidirectional optical system of Fig. 1 is very efficient when the traffic demands on bidirectional optical fibers 11 and 12 are symmetric between the East and West directions. However, in systems in which the traffic demands are asymmetric, the configuration in Fig. 1 is not efficient. Asymmetric traffic flow could cause the system of Fig. 1 to not have enough wavelengths to carry information in the busy direction while, at the same time, have unused wavelengths allocated to the other direction. In addition, the configuration of Fig. 1 cannot adapt to changing traffic demands. That is, since it is fixed, it can not re-allocate the available wavelengths λ_{1...n} such that unused wavelengths allocated to one direction are reallocated to carry information in the other direction. Essentially, the only way to achieve a reallocation in the configuration of Fig. 1 would be to change the configuration altogether. That is, fixed optical filters 15 and 17 would have to be replaced with a new set of fixed optical filters each time a reallocation is desired. Replacing fixed optical filters 15 and 17 each time a reallocation is needed would not only be costly but would disturb or shut down the entire system (i.e. communications on every wavelength λ₁₋ₙ) every time the filters were replaced.

### BRIEF SUMMARY OF THE INVENTION

The present invention provides a bidirectional optical communications system that enables the allocation and reallocation of available wavelengths between the East and West directions in an optical fiber without the need for replacing optical components, such as fixed optical filters, and without the need to disturb or shut down communications on the fiber. This is accomplished by using programmable optical devices that are operable to dynamically allocate wavelengths between the East and West directions in the bidirectional optical fiber, as needed. As used herein, the term dynamic allocation refers to the ability to allocate and reallocate wavelengths between the East and West directions in a bidirectional optical fiber without the need to replace optical components, such as fixed optical filters, and without the need to disrupt communications on the wavelengths that are not being reallocated. As used herein, the term programmable optical component refers to subsystems which can be controlled from a signal sent from outside the optical component. For example, the signal can be an electrical digital signal generated from a computer.

In accordance with the invention, the programmable optical devices may be well known programmable devices such wavelength selective switches and wavelength blockers or any other programmable optical device capable of dynamically allocating wavelengths between the two directions in a bidirectional optical fiber. In addition, the programmable optical devices in accordance with the invention may be any combination of such wavelength selective switches, wavelength blockers, or other programmable optical devices with any other optical devices such as broadband three-port routing elements (including but not limited to optical circulators), gain blocks, add/drop multiplexers, or fixed optical filters.

In accordance with an embodiment of the invention, two programmable optical devices, a 1x2 wavelength selective switch and a 2x1 wavelength selective switch, are used in combination with two optical circulators and a gain block to provide the dynamic allocation of wavelengths between the East and West directions in a bidirectional optical fiber.

In another embodiment of the invention, two programmable wavelength blockers are combined with two optical circulators and two gain blocks to form a programmable optical component that is operable to provide dynamic allocation of wavelengths between the East and West directions in a bidirectional optical fiber.

In yet another embodiment of the invention, a programmable optical component composed of two 2x2 wavelength selective switches, two optical circulators, and one gain block, is combined with a mux/demux structure and a transmitter and receiver bank. The mux/demux structure and the transmitter and receiver bank operate as an add/drop multiplexer that enables wavelengths to be dynamically added to and removed from the bidirectional optical fiber as traffic needs change. Thus, such an embodiment not only provides the ability to dynamically allocate wavelengths between East and West in a bidirectional optical fiber, but it also provides the ability to dynamically add and remove wavelengths as needed.

These and other advantages of the invention will be apparent to those of ordinary skill in the art by reference to the following detailed description and the accompanying drawings.

### BRIEF DESCRIPTION OF THE DRAWINGS

Fig. 1 shows a prior art configuration of an optical communications system including a bidirectional optical amplifier providing a fixed, symmetric allocation of bandwidth over a bidirectional optical fiber.

Fig. 2 illustrates an embodiment of the present invention.

Fig. 3 illustrates another embodiment of the present invention.

Fig. 4 illustrates yet another embodiment of the present invention.

Fig. 5 illustrates yet another embodiment of the present invention.

Fig. 6 illustrates yet another embodiment of the present invention.

### DETAILED DESCRIPTION

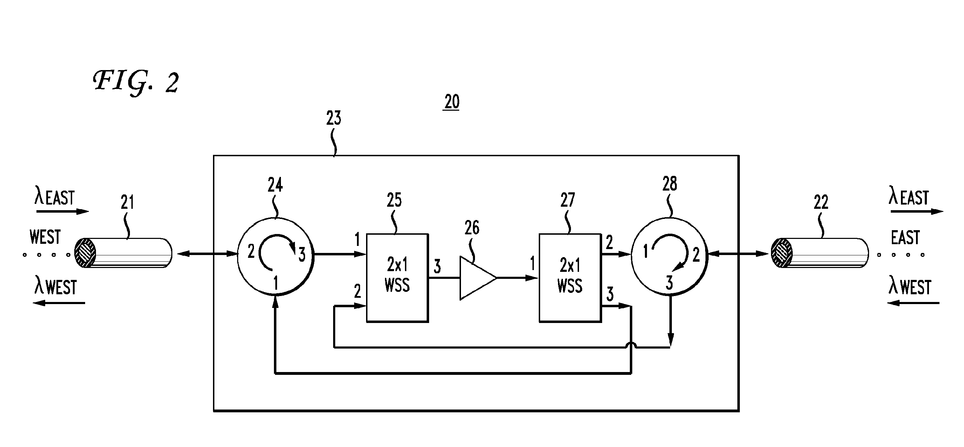

FIG. 2 shows an embodiment of a bidirectional communications system 20 in accordance with the present invention. As shown, a programmable optical component 23 is coupled to a bidirectional optical fiber 21 and a bidirectional optical fiber 22. Bidirectional optical fiber 21 is operable to transmit a set of available wavelengths λ_{1...n} to and from a West direction, and bidirectional optical fiber 22 is operable to transmit a set of available wavelengths λ_{1...n} to and from an East direction. Programmable optical component 23 has an optical circulator 24, a 2x1 wavelength selective switch 25, a gain block 26, a 1x2 wavelength selective switch 27, and an optical circulator 28, all known devices in the art. Gain block 26 may be an erbium doped fiber amplifier or any other amplifier known in the art.

Wavelengths traveling from West to East, λ_{East}, on bidirectional optical fiber 21 will enter programmable optical component 23 and be input to port 2 of optical circulator 24. Optical circulator 24 will output the wavelengths λ_{East} at port 3 for input to port 1 of 2x1 wavelength selective switch 25. 2x1 wavelength selective switch 25 is programmed to initially forward wavelengths λ_{East} input at port 1 to its output port 3 and block any other wavelengths. However, as will be discussed below, 2x1 wavelength selective switch 25 is programmed to dynamically change the set of wavelengths that will be forwarded from its input port 1 to its output port 3. Thus, initially, 2x1 wavelength selective switch 25 will output wavelengths λ_{East} through port 3 to gain block 26. Gain block 26 will amplify wavelengths λ_{East} and input them to port 1 of 1x2 wavelength selective switch 27. 1x2 wavelength selective switch 27 is programmed to initially forward wavelengths λ_{East} (and only wavelengths λ_{East}) to output port 2. However, as will be discussed below, 1x2 wavelength selective switch 27 is programmed to dynamically change the set of wavelengths that will be allowed to pass from port 1 to port 2. Thus, initially, 1x2 wavelength selective switch 27 will forward wavelengths λ_{East} to circulator 28 which, in turn, will forward wavelengths λ_{East} through to bidirectional optical fiber 22 for transmission in the East direction.

Wavelengths traveling from East to West, λ_{west}, on bidirectional optical fiber 22 will enter programmable optical component 23 and be input to port 2 of optical circulator 28. Optical circulator 28 will forward wavelengths λ_{west} through its port 3 to input port 2 of 2x1 wavelength selective switch 25. 2x1 wavelength selective switch 25 is programmed to initially forward wavelengths λ_{west} from input port 2 to output port 3 and block any other wavelengths. However, as will be discussed below, 2x1 wavelength selective switch 25 is programmed to dynamically change the set of wavelengths that will be allowed to pass from port 2 to port 3. Thus, initially, wavelengths λ_{west} will pass through gain block 26 to input port 1 of 1x2 wavelength selective switch 27. 1x2 wavelength selective switch 27 is programmed to initially pass wavelengths λ_{west} input at port 1 to output port 3 (Note: In the preferred embodiment, only wavelengths λ_{west} are output to port 3, and wavelengths which are not included in either λ_{East} or λ_{west} are blocked). However, as will be discussed below, 1x2 wavelength selective switch 27 is programmed to dynamically change the set of wavelengths that will be allowed to pass from port 1 to port 3. Thus, initially, 1x2 wavelength selective switch 27 will pass wavelengths λ_{west} to port 1 of optical circulator 24 which, in turn, will pass wavelengths λ_{west} to bidirectional optical fiber 21 for transmission in the West direction.

As mentioned above, 1x2 wavelength selective switch 25 and 2x1 wavelength selective switch 27 are programmed to change the set of wavelengths that are allowed to pass from their input port(s) to their output port(s). It is well known in the art how to program 2x1 wavelength selective switches and 1x2 wavelength selective switch to change the set of wavelengths that are allowed to pass. For example, assuming that initially λ_{East} is composed of a first set of wavelengths λ_{1...n/2} and wavelengths λ_{west} is composed of a second set of wavelengths λ_{(n+1)/2..n}, it is well known in the art how to program 2x1 wavelength selective switch 25 and 1x2 wavelength selective switch 27 to dynamically change the wavelengths in the first and second set. That is, wavelength selective switches 25 and 27 can be programmed to dynamically reallocate wavelengths from the first set of wavelengths to the second set of wavelengths, and vice versa. In this way, optical communications system 20 may dynamically change the set of wavelengths allocated for transmission in the East and West directions of bidirectional optical fibers 21 and 22 without affecting communications on wavelengths that are not being reallocated and without the need to replace fixed optical filters.

Wavelength selective switches are preferably designed to be fully flexible, i.e. any wavelength can be routed from any input port to any output port, regardless of the routing of other wavelengths. However, less flexible devices may be used. Such less flexible wavelength selective switches exist which can dynamically change how wavelengths are routed, subject to constraints ― e.g. all wavelengths that are output from the switch must be adjacent to one another (from a continuous band within the optical spectrum). Such wavelength selective switches may be less expensive than a fully flexible wavelength selective switch but still provide the ability to dynamically reallocate wavelengths between the two directions in an optical fiber.

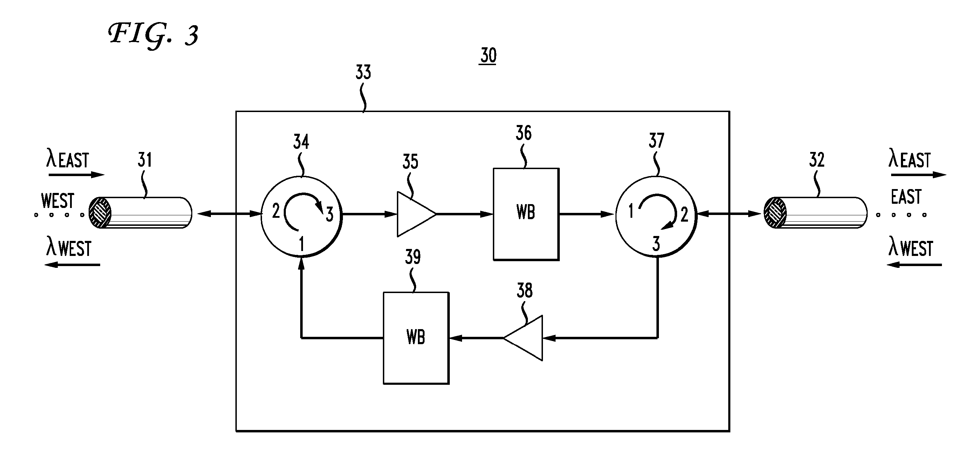

Fig. 3 shows another embodiment of an optical communications system in accordance with the present invention. As shown, optical communications system 30 has a programmable optical component 33 coupled to a bidirectional optical fiber 31 and a bidirectional optical fiber 32. Bidirectional optical fiber 31 is operable to transmit a set of available wavelengths λ_{1...n} to and from a West direction, and bidirectional optical fiber 32 is operable to transmit a set of available wavelengths λ_{1...n} to and from an East direction. Programmable optical component 33 has optical circulators 34 and 37, gain blocks 35 and 38, and wavelength blockers 36 and 39. Optical circulators 34 and 37, and wavelength blockers 36 and 39 are well known devices in the art. Gain blocks 35 and 38 may be erbium doped fiber amplifiers or any other amplifiers known in the art.

Wavelengths traveling from West to East, λ_{East}, on bidirectional optical fiber 31 will enter programmable optical component 33 and be input to port 2 of optical circulator 34. Optical circulator 34 will pass wavelengths λ_{East} through port 3 to gain block 35. Gain block 35 will amplify wavelengths λ_{East} and input them to wavelength blocker 36. Initially, wavelength blocker 36 is programmed to pass wavelengths λ_{East} to optical circulator 37 and block any other wavelengths. However, as will be discussed below, wavelength blocker 36 is programmed to dynamically change the set of wavelengths that will be allowed to pass to optical circulator 37. Thus, initially, wavelength blocker 36 will output wavelengths λ_{East} to optical circulator 37 which, in turn, will forward wavelengths λ_{East} to bidirectional optical fiber 32 for transmission in the East direction.

Wavelengths traveling from East to West, λ_{west}, on bidirectional optical fiber 32 will enter programmable optical component 33 and be input to port 2 of optical circulator 37. Optical circulator 37 will forward wavelengths λ_{west} through its port 3 to gain block 38. Gain block 38 will amplify wavelengths λ_{East} and input them to wavelength blocker 39. Initially, wavelength blocker 39 is programmed to forward wavelengths λ_{west} to optical circulator 34 and block any other wavelengths. However, as will be discussed below, wavelength blocker 39 is programmed to dynamically change the set of wavelengths that will be allowed to pass to optical circulator 34. Thus, initially, wavelengths λ_{west} will pass through wavelength blocker 39 to optical circulator 34 which, in turn, will pass wavelengths λ_{West} to bidirectional optical fiber 31 for transmission in the West direction.

As mentioned above, wavelength blockers 36 and 39 are programmed to change the set of wavelengths that are allowed to pass from their input ports to their output ports. It is well known in the art how to program wavelength blockers to change the set of wavelengths that are allowed to pass. For example, assuming that initially λ_{East} is composed of a first set of wavelengths λ_{1...n/2} and wavelengths λ_{west} is composed of a second set of wavelengths λ_{(n+1)/2..n}, it is well known in the art how to program wavelength blockers 36 and 39 to change the wavelengths in the first and second set. Thus, through programming, wavelength blockers 36 and 39 are operable to dynamically reallocate wavelengths from the first set of wavelengths to the second set of wavelengths, and vice versa. In this way, optical communications system 30 may dynamically change the set of wavelengths allocated for transmission in the East and West direction of bidirectional optical fibers 31 and 32 without affecting communications on wavelengths that are not being reallocated and without the need to replace fixed optical filters.

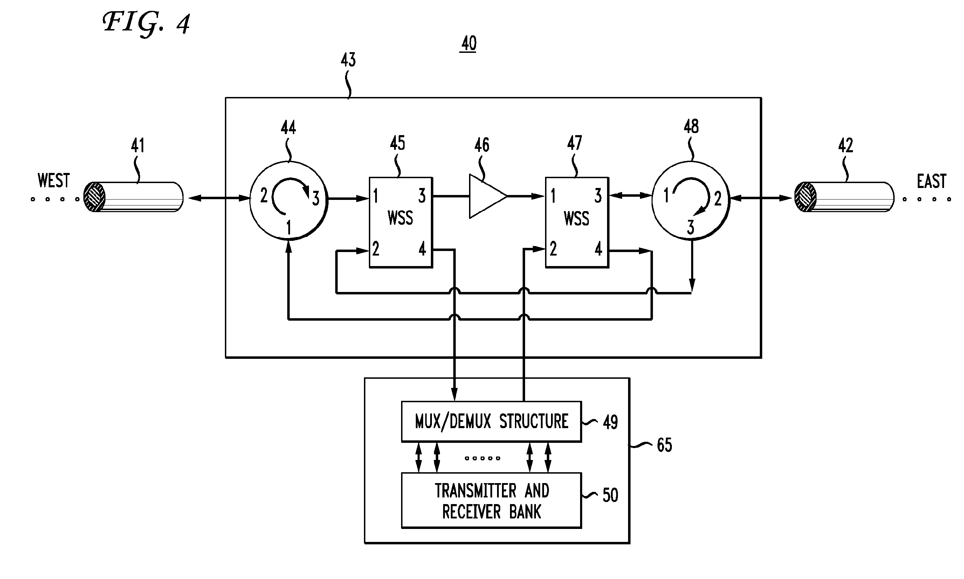

Another embodiment of the present invention is shown in Figure 4. As shown, optical communications system 40 has a programmable optical component 43 coupled to a bidirectional optical fiber 41, a bidirectional optical fiber 42, and an add/drop assembly 65. Bidirectional optical fiber 41 is operable to transmit a set of available wavelengths λ_{1...n} to and from a West direction, and bidirectional optical fiber 42 is operable to transmit a set of available wavelengths λ_{1...n} to and from an East direction. Add/drop assembly 65 is composed of a mux/demux structure 49 connected to a transmitter and receiver bank 50, both of which are known in the art. Programmable optical component 43 has two optical circulators 44 and 48 and two 2x2 wavelength selective switches 45 and 47, all of which are known in the art, and a gain block 46. Gain block 46 may be an erbium doped fiber amplifier or any other amplifier known in the art.

Wavelengths traveling from West to East on optical fiber 41 λ_{East-in}, in bidirectional optical fiber 41 will enter programmable optical component 43 and be input to port 2 of optical circulator 44. Optical circulator 44 will output the wavelengths λ_{East-in} at port 3 for input to port 1 of 2x2 wavelength selective switch 45. λ_{East-in} consists of λ_{East-drop} and λ_{East-express}, where λ_{East-drop} includes all wavelengths in λ_{East-in} carrying signals destined for transmitter and receiver bank 50, and λ_{East-express} are the wavelengths in λ_{East-in} that should be forwarded to optical fiber 42 for transmission further along optical transmission system 40. Initially, 2x2 wavelength selective switch 45 is programmed to forward wavelengths λ_{East-express} from its input port 1 to its output port 3, and to forward wavelengths λ_{East-drop} to output port 4, so that these wavelengths can be processed by the add/drop assembly 65. However, as will be discussed below, 2x2 wavelength selective switch 45 is programmed to dynamically change the set of wavelengths that will be forwarded from its inputs port 1 to its output ports 3 and 4. Thus, initially, 2x2 wavelength selective switch 45 will output wavelengths λ_{East-express} through port 3 to gain block 46, and output wavelengths λ_{East-drop} through its output port 4 to add/drop assembly 65.

Wavelengths traveling from East to West, λ_{west-in}, on bidirectional optical fiber 42 will be input to programmable optical device 43 and passed through optical circulator 48 to input port 2 of 2x2 wavelength selective switch 45. λ_{West-in} consists of λ_{West-drop} and λ_{West-express}, where λ_{West-drop} includes all wavelengths in λ_{West-in} carrying signals destined for add/drop assembly 65, and λ_{West-express} are the wavelengths in λ_{West-in} that should be forwarded to optical fiber 41 for transmission further along optical transmission system 40 Initially, 2x2 wavelength selective switch 45 is programmed to forward wavelengths λ_{west-express} from input port 2 to output port 3 and to forward wavelengths λ_{west-drop} to output port 4, so that these wavelengths can be processed by the add/drop assembly 65. However, as will be discussed below, 2x2 wavelength selective switch 45 is programmed to dynamically change the set of wavelengths that will be forwarded from its input port 2 to its output ports 3 and 4.

Thus, initially, 2x2 wavelength selective switch 45 will forward wavelengths λ_{East-express} input at port 1 and wavelengths λ_{west-express} input at port 2 to output port 3. Wavelengths λ_{East-express} and λ_{west-express} will then be amplified in gain block 46 and passed to input port 1 of 2x2 wavelength selective switch 47. Signals to be added to optical transmission system 40 will be generated within transmitter and receiver bank 50 at wavelengths λ_{East-add} and λ_{west-add}. These wavelengths are passed by mux/demux structure 49 to port 2 of wavelength selective switch 47. Initially, 2x2 wavelength selective switch 47 is programmed to forward wavelengths λ_{East-express} input at its input port 1 and λ_{East-add} input at its input port 2 to its output port 3, and forward wavelengths λ_{West-express} input at its input port 1 and λ_{West-add} input at its input port 2 to its output port 4. However, as will be discussed below, 2x2 wavelength selective switch 47 is programmed to dynamically change the set of wavelengths that will be allowed to pass from its input port 1 to it output ports 3 and 4. Thus, initially, 2x2 wavelength selective switch 47 will forward wavelengths λ_{East-express} input at port 1 and λ_{East-add} input at its input port 2 through output port 3 to optical circulator 48 which will forward wavelengths λ_{East-express} and λ_{East-add} through its port 2 to bidirectional optical fiber 42 for transmission in the East direction. And, it will forward wavelengths λ_{west-express} and λ_{west-add} through output port 4 to optical circulator 44 which will pass wavelengths λ_{west-express} and λ_{west-add} to bidirectional optical fiber 41 for transmission in the West direction.

Wavelengths that are part of λ_{East-drop} can also be assigned to λ_{East-add}. However they cannot be also be assigned to λ_{West-add}. In general, wavelength sets λ_{East-in}, λ_{West-express} and λ_{West-add} must all be disjoint, as must , λ_{West-in}, λ_{East-express} and λ_{East-add} In addition, for the embodiment shown in Fig.4, wavelength set λ_{East-drop} must be disjoint from λ_{West-drop} and wavelength set λ_{East-add} must be disjoint from λ_{West-add}.

As mentioned above, 2x2 wavelength selective switches 45 and 47are programmed to dynamically change the set of wavelength that are allowed to pass from their input ports to their output ports. It is well known in the art how to program 2x2 wavelength selective switches to change the set of wavelengths that are allowed to pass. For example, assuming that initially λ_{East-express} is composed of a first set of wavelengths λ_{1...n/2} and wavelengths λ_{west-express} is composed of a second set of wavelengths λ_{(n+1)/2..n}, it is well known in the art how to program 2x2 wavelength selective switches 45 and 47 to dynamically change the wavelengths in the first and second set. That is, the wavelength selective switches can be programmed to dynamically reallocate wavelengths from the first set of wavelengths to the second set of wavelengths, and vice versa. In this way, optical communications system 40 may dynamically change the set of wavelengths allocated for transmission in the East and West directions of bidirectional optical fibers 41 and 42 without affecting communications on wavelengths that are not being reallocated and without the need to replace fixed optical filters. Similarly, wavelength selective switches 45 and 47 are programmed to dynamically add wavelengths to and remove wavelengths from the sets λ_{East-drop} λ_{East-add}. λ_{West-drop} and λ_{West-add}.

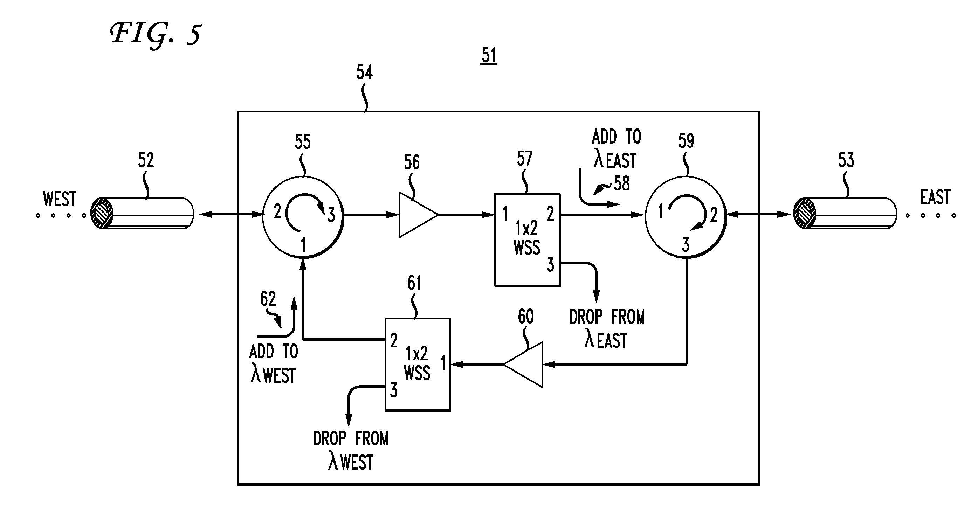

FIG. 5 shows another embodiment of a bidirectional communications system in accordance with the present invention. As shown, bidirectional optical communications system 51 has a programmable optical component 54 coupled to a bidirectional optical fiber 52 and a bidirectional optical fiber 53. Bidirectional optical fiber 52 is operable to transmit a set of available wavelengths λ_{1...n} to and from a West direction, and bidirectional optical fiber 53 is operable to transmit a set of available wavelengths λ_{1...n} to and from an East direction. Programmable optical component 54 has optical circulators 55 and 59, 1x2 wavelength selective switches 57 and 61, and optical couplers 58 and 62, and gain blocks 56 and 60, all of which are known in the art. Gain blocks 56 and 60 may be an erbium doped fiber amplifier or any other amplifier known in the art.

Wavelengths traveling from West to East, λ_{East-in}, on bidirectional optical fiber 52 will enter programmable optical component 54 and be input to port 2 of optical circulator 55. Optical circulator 55 will output the wavelengths λ_{East-in} at port 3 for input to gain block 56. Gain block 56 will amplify wavelengths λ_{East-in} and pass them to 1x2 wavelength selective switch 57. Initially, 1x2 wavelength selective switch 57 is programmed to forward wavelengths λ_{East-express}. input at port 1 to its output port 3 and send wavelengths λ_{East-drop} through output port 3. However, as will be discussed below, 1x2 wavelength selective switch 57 is programmed to dynamically change the set of wavelengths that will be forwarded from its input port 1 to its output port 2, and the set of wavelengths that will be dropped through port 3. Thus, initially, 1x2 wavelength selective switch 57 will output wavelengths λ_{East-express} to optical circulator 59 which, in turn, will forward wavelengths λ_{East-express} to bidirectional optical fiber 53 for transmission in the East direction. Optical coupler 58 may add wavelengths λ_{East-add} to wavelengths λ_{East-express}, as needed.

Wavelengths traveling from East to West, λ_{West-in}, on bidirectional optical fiber 53 will enter programmable optical component 54 and be input to port 2 of optical circulator 59. Optical circulator 59 will forward wavelengths λ_{West-in} through its port 3 to gain block 60. Gain block 60 will amplify wavelengths λ_{west} and pass them to 1x2 wavelengths selective switch 61. Initially, 1x2 wavelength selective switch 61 is programmed to forward wavelengths λ_{west-express} to output port 2 and drop selected wavelengths λ_{west-drop} though port 3. However, as will be discussed below, 1x2 wavelength selective switch 61 is programmed to dynamically change the set of wavelengths that will be allowed to pass from port 1 to port 2, and the set of wavelengths dropped through port 3. Thus, initially, wavelengths λ_{west-express} will pass through 1x2 wavelength selective switch 61 to optical circulator 55. Optical circulator 55 will pass wavelengths λ_{west-express} to bidirectional optical fiber 52 for transmission in the West direction. Wavelengths λ_{west-add} may be added to wavelengths λ_{west-express} through optical coupler 62, as needed.

As mentioned above, 1x2 wavelength selective switches 57 and 61 are programmed to change the set of wavelengths that are allowed to pass from their input ports to their output ports. It is well known in the art how to program 1x2 wavelength selective switches to change the set of wavelengths that are allowed to pass. For example, assuming that initially λ_{East-in} is composed of a first set of wavelengths λ_{1...n/2} and wavelengths the union of λ_{west-express} and λ_{west-add} is composed of a second set of wavelengths λ_{(n+1)/2..n}, it is well known in the art how to program a 1x2 wavelength selective switches 57 and 61 to dynamically change the wavelengths in the first and second set. That is, the wavelength selective switches can be programmed to dynamically reallocate wavelengths from the first set of wavelengths to the second set of wavelengths, and vice-versa.. Wavelengths can also be reassigned from λ_{East-expess} to λ_{East-add} and/or λ_{East-drop} and vice-versa. In this way, optical communications system 51 may dynamically change the set of wavelengths allocated for transmission in the East and West directions of bidirectional optical fibers 52 without affecting communications on wavelengths that are not being reallocated and without the need to replace fixed optical filters. Similarly, the wavelengths in sets λ_{West-in}, λ_{East-express} and λ_{East-add} can be reassigned.

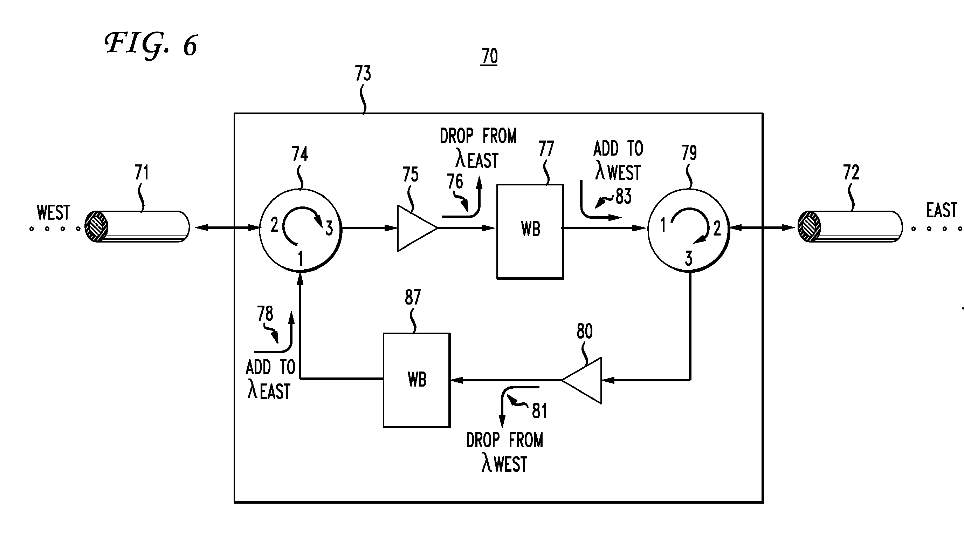

Fig. 6 shows another embodiment of an optical communications system in accordance with the present invention. As shown, optical communications system 70 has a programmable optical component 73 coupled to a bidirectional optical fiber 71 and a bidirectional optical fiber 72. Bidirectional optical fiber 71 is operable to transmit a set of available wavelengths λ_{1...n} to and from a West direction, and bidirectional optical fiber 32 is operable to transmit a set of available wavelengths λ_{1...n} to and from an East direction. Programmable optical component 33 has optical circulators 74 and 79, gain blocks 75 and 80, wavelength blockers 77 and 87, optical couplers 76,78, 81, and 83., Optical circulators 74 and 79, wavelength blockers 77 and 87, optical couplers 76,78, 81, and 83 are known devices in the art. Gain blocks 75 and 80 may be erbium doped fiber amplifiers or any other amplifiers known in the art.

Wavelengths traveling from West to East, λ_{East-in}, on bidirectional optical fiber 71 will enter programmable optical component 73 and be input to port 2 of optical circulator 74. Optical circulator 74 will output the wavelengths λ_{East-in} at port 3 for input to gain block 75. Gain block 75 will amplify wavelengths λ_{East-in} and input them through coupler 76, to wavelength blocker 77. Wavelength blocker 77 is programmed to initially pass wavelengths λ_{East-express} through coupler 78 to optical circulator 79 and block any other wavelengths. However, as will be discussed below, wavelength blocker 77 is programmed to dynamically change the set of wavelengths that will be allowed to pass to optical circulator 79. Thus, initially, wavelength blocker 77 will output wavelengths λ_{East-express} through coupler 78 to optical circulator 79 which, in turn, will forward wavelengths λ_{East-express} to bidirectional optical fiber 72 for transmission in the East direction. Selected wavelengths may be added to wavelengths λ_{East-express} through optical coupler 78. Optical coupler 76 diverts some power from every wavelength in λ_{East-in}. This allows the wavelengths intended for drop at this location to be selected and received

Wavelengths traveling from East to West, λ_{West-in}, on bidirectional optical fiber 72 will enter programmable optical component 73 and be input to port 2 of optical circulator 79. Optical circulator 79 will forward wavelengths λ_{West-in} through its port 3 to gain block 80. Gain block 80 will amplify wavelengths λ_{West-in} and input them through optical coupler 81 to wavelength blocker 87. Wavelength blocker 87 is programmed to initially forward wavelengths λ_{west-express} through optical coupler 83 to optical circulator 74 and block all other wavelengths. However, as will be discussed below, wavelength blocker 87 is programmed to dynamically change the set of wavelengths that will be allowed to pass through coupler 83 to optical circulator 74. Thus, initially, wavelengths λ_{west-express} will pass through wavelength blocker 87, optical coupler 83 to optical circulator 74 which, in turn, will pass wavelengths λ_{west-express} to bidirectional optical fiber 71 for transmission in the West direction. Wavelengths λ_{west-add}, which must be a disjoint set of wavelengths from λ_{west-express}, and λ_{East-in}, can be added to optical transmission system 70 through the add port of optical coupler 83.

As mentioned above, wavelength blockers 77 and 87 are programmed to change the set of wavelengths that are allowed to pass from their input ports to their output ports. It is well known in the art how to program wavelength blockers to change the set of wavelengths that are allowed to pass. For example, assuming that initially λ_{East-}in is composed of a first set of wavelengths λ_{1...n/2} and the union of wavelengths λ_{west-add}, and λ_{west-express} is composed of a second set of wavelengths λ_{(n+1)/2..n}, it is well known in the art how to program wavelength blockers 77 and 87 to change the wavelengths in the first and second set. Thus, through programming, wavelength blockers 77 and 87 are operable to dynamically reallocate wavelengths from the first set of wavelengths to the second set of wavelengths, and vice verse. In this way, optical communications system 70 may dynamically change the set of wavelengths allocated for transmission in the East and West direction of bidirectional optical fibers 71 and 72 without affecting communications on wavelengths that are not being reallocated and without the need to replace fixed optical filters.

The embodiments described in Fig. 5 and Fig. 6 have the additional advantage over the embodiment of Fig. 4 in that they are not subject to the limitation that wavelength set λ_{East-drop} must be disjoint from λ_{West-drop} and wavelength set λ_{East-add} must be disjoint from λ_{West-add}. The embodiment described in Fig. 4 has the additional advantage over the embodiments of Fig. 5 and Fig. 6 that it allows a single transmitter and receiver bank to serve wavelengths coming from/going to both the East-facing and the West-facing fibers.

To one skilled in the art, it will be clear that some or all of the gain blocks shown in Figs. 1-6 could be replaced by other types of unidirectional, multiwavelength optical signal processing elements known in the art. In particular, gain blocks might be replaced by, or might include, elements for chromatic dispersion compensation, gain equalization, wavelength conversion, or all-optical regeneration, or other optical signal processing functions. Similarly, the optical circulators shown in Figs. 1-6 could be replaced by optical couplers or other broadband, three-port routing elements known in the art.

The foregoing Detailed Description is to be understood as being in every respect illustrative and exemplary, but not restrictive, and the scope of the invention disclosed herein is not to be determined from the Detailed Description, but rather from the claims as interpreted according to the full breadth permitted by the patent laws. It is to be understood that the embodiments shown and described herein are only illustrative of the principles of the present invention and that various modifications may be implemented by those skilled in the art without departing from the scope and spirit of the invention. Those skilled in the art could implement various other feature combinations without departing from the scope and spirit of the invention.

## Claims

1. An optical communication system comprising:
at least one optical fiber, said at least one optical fiber being operable for bidirectional communications in said system; and
a programmable optical component coupled to said at least one optical fiber, said programmable optical component being operable to dynamically allocate wavelengths, from a set of available wavelengths, for transmission in either direction of said bidirectional communications.

2. The optical communication system of claim 1, wherein said programmable component comprises at least one wavelength selective switch.

3. The optical communication system of claim 2, wherein said programmable optical component further comprises at least two optical broadband three-port routing elements and at least one unidirectional optical signal processing element.

4. The optical communication system of claim 3, wherein said at least one wavelength selective switch comprises either a 1x2 wavelength selective switch and a 2x1 wavelength selective switch; or two 2x2 wavelength selective switches.

5. The optical communication system of claim 3 or 4, wherein said programmable optical component further comprises a second unidirectional optical signal processing element.

6. The optical communication system of claim 1 wherein said programmable optical component comprises at least two programmable wavelength blockers.

7. In an optical communication system having bidirectional communications and an optical fiber operable to transmit a set of available wavelengths in either direction of said bidirectional communications, a method comprising the steps of:
dynamically allocating said set of available wavelengths for transmission through said optical fiber such that a first subset of said set of available wavelengths are allocated for transmission in one direction of said bidirectional communications and a second subset of said set of available wavelengths are allocated for transmission in the other direction of said bidirectional communications.

8. The method of claim 7, wherein said step of dynamically allocating said set of available wavelengths is performed through a programmable optical component.

9. The method of claim 8, further comprising the step of dynamically reallocating said set of available wavelengths so that at least one wavelength in said first subset is allocated to said second subset.

10. The method of claim 9, wherein said programmable optical component comprises at least one wavelength selective switch.

11. The method of claim 10, wherein said programmable optical component further comprises at least two optical broadband three-port routing elements and at least one unidirectional optical signal processing element.

12. The method of any of claims 8 to 11, further comprising the step of:
using at least two optical couplers, dropping optical signals from said at least one optical fiber.
